(19) Europäisches Patentamt
European Patent Office
Office européen des brevets

(11) **EP 4 385 674 B1**

(12) **EUROPEAN PATENT SPECIFICATION**

(45) Date of publication and mention of the grant of the patent:
**18.06.2025 Bulletin 2025/25**

(21) Application number: **23215128.2**

(22) Date of filing: **08.12.2023**

(51) International Patent Classification (IPC):
***B25J 9/00*** (2006.01)

(52) Cooperative Patent Classification (CPC):
**B25J 9/0006**

(54) **WEARABLE SUIT**

TRAGBARER ANZUG

COMBINAISON POUVANT ÊTRE PORTÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2022 KR 20220175553**

(43) Date of publication of application:
**19.06.2024 Bulletin 2024/25**

(73) Proprietors:
• **Hyundai Mobis Co., Ltd.**
 **Gangnam-gu**
 **Seoul (KR)**
• **Withforce Inc.**
 **Uiwang-si, Gyeonggi-do (KR)**

(72) Inventors:
• **JEONG, Lae Hoon**
 **16354 Osan-si, Gyeonggi-do (KR)**
• **CHOI, Yong Seok**
 **17162 Yongin-si, Gyeonggi-do (KR)**
• **KIM, Young Min**
 **18113 Osan-si, Gyeonggi-do (KR)**
• **LEE, Soong Do**
 **10125 Gimpo-si, Gyeonggi-do (KR)**

(74) Representative: **Frenkel, Matthias Alexander Wuesthoff & Wuesthoff Patentanwälte und Rechtsanwalt PartG mbB Schweigerstraße 2 81541 München (DE)**

(56) References cited:
WO-A1-2019/161232   WO-A1-2021/188516
KR-A- 20210 029 079   KR-A- 20210 153 910

**Description**

**BACKGROUND**

1. Field

The present disclosure relates to an actuator and a wearable suit including the same.

2. Description of Related Art

The content described in this section simply provides background information for the present disclosure and does not constitute prior art.

A wearable robot and a wearable suit (hereinafter, collectively referred to as a "wearable suit") refer to a type of robot worn on a human body. A user directly takes charge of posture control, context-awareness, and motion signal generation, which are handled by artificial intelligence of a robot, and the wearable suit supports a muscular strength and mobility of the user in response to various situations.

As a sensor, control, and a software technology develop, a wearable suit is used in various fields such as military, disaster relief, industrial work, rehabilitation treatment, and daily life assistance. The wearable suit can increase a work execution time and a work performance range of a user by assisting physical ability of the user in environments such as disaster sites and mountainous terrain. The wearable suit can be used for work and rehabilitation treatment by assisting the muscular strength and physical defects of the user in daily life.

The wearable suit can be divided into a passive type and an active suit according to the power implementation method. Here, the passive type means a method using a preset force such as a spring or an elastic band, and the active type means a method using a variable force such as a motor or hydraulic pressure.

WO 2019/161232 A1 discloses systems comprising an elastic body to assist with human motion during physical activities. In the document it is described that the elastic body may be designed to be shorter than its anchor points to provide tensile forces while the user is standing.

The object of the present invention is to provide a wearable suit that can be more efficiently and comfortably implemented.

**SUMMARY**

The invention is defined by the appended claims.

**BRIEF DESCRIPTION OF THE DRAWINGS**

FIG. 1 is a diagram illustrating the configuration of a wearable suit according to one embodiment of the present disclosure.
FIG. 2 is a diagram illustrating a user wearing a wearable suit according to one embodiment of the present disclosure.
FIG. 3 is a diagram illustrating a fixing unit according to another embodiment of the present disclosure.
FIG. 4 is a block diagram of a wearable suit according to one embodiment of the present disclosure.
FIG. 5 is a diagram illustrating a wearable suit in which a guiding member according to one embodiment of the present disclosure is installed.
FIGS. 6A and 6B are diagrams illustrating various embodiments of a leg connecting unit according to the present disclosure.
FIGS. 7A and 7B are diagrams illustrating an operating principle of the wearable suit according to one embodiment of the present disclosure.
FIGS. 8A and 8B are diagrams illustrating the operating principle of a muscular strength assistance unit according to one embodiment of the present disclosure.
FIG. 9 is a diagram illustrating a structure of an actuator according to one embodiment of the present disclosure.
FIGS. 10A and 10B are displacement-assistance force graphs for each of an elastic body in equilibrium and an elastic body with initial displacement.
FIGS. 11A and 11B are diagrams illustrating various embodiments of a frame according to one embodiment of the present disclosure.
FIGS. 12A and 12B are diagrams illustrating a magnitude of an initial assistance force according to a position of a stopper according to one embodiment of the present disclosure.
FIG. 13 is a diagram illustrating a structure of an actuator capable of changing an initial displacement of an elastic body according to one embodiment of the present disclosure.
FIG. 14 is a displacement-assistance force graph for an elastic body made of a shape memory alloy and having an initial displacement according to one embodiment of the present disclosure.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

**DETAILED DESCRIPTION**

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, portions, or sections, these members, components, regions, layers, portions, or sections are not to be limited by these terms. Each of these terminologies is not used to define an essence, order, or sequence of corresponding members, components, regions, layers, portions, or sections, for example, but used merely to distinguish the corresponding members, components, regions, layers, portions, or sections from other members, components, regions, layers, portions, or sections. Thus, a first member, component, region, layer, portions, or section referred to in the examples described herein may also be referred to as a second member, component, region, layer, portions, or section without departing from the teachings of the examples.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing. As used herein, the term "and/or" includes any and all combinations of one or more of the associated listed items. For example, "A and/or B" may be interpreted as "A," "B," or "A and B."

The terminology used herein is for the purpose of describing particular examples only and is not to be limiting of the examples. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

A wearable suit according to one embodiment assists a muscular strength of a user using a muscular strength assistance unit including an elastic body, thereby simplifying the structure, reducing weight, and removing noise caused by driving a motor.

A wearable suit according to one embodiment can provide sufficient assistance force to the user even at the beginning of operation by using a stopper that fixes the elastic body in a contracted or expanded state.

A term "~unit," "module," or the like, described in the specification means a unit of processing at least one function or operation and may be implemented by hardware or software or a combination of hardware and software.

Unless otherwise stated, it should be noted that a description of any one embodiment may be applied to other embodiments as well.

The description of the present disclosure to be disclosed below with the accompanying drawings is intended to describe exemplary embodiments of the present disclosure, and is not intended to represent the only embodiments in which the present disclosure may be practiced.

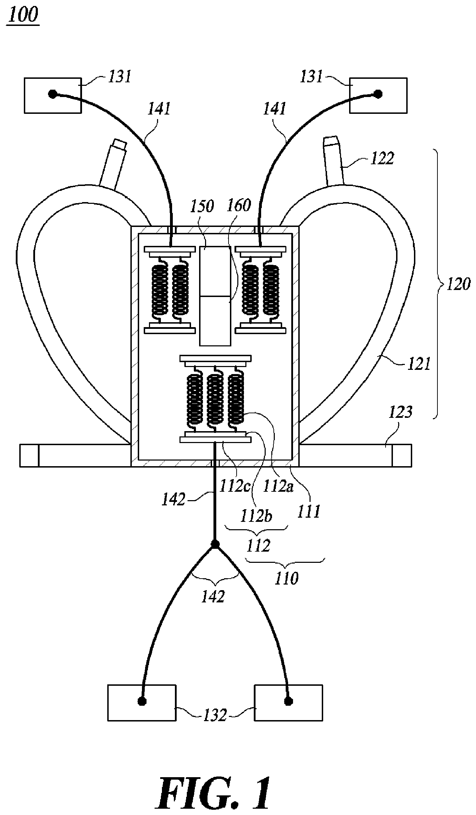

FIG. 1 is a diagram illustrating the configuration of a wearable suit according to one embodiment of the present disclosure.

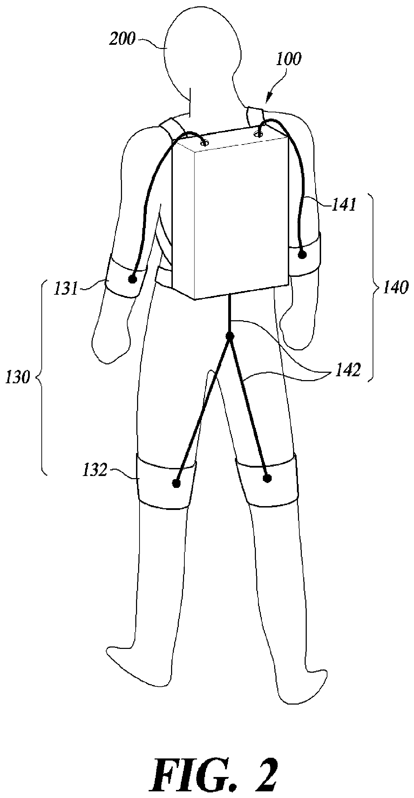

FIG. 2 is a diagram illustrating a user wearing a wearable suit according to one embodiment of the present disclosure.

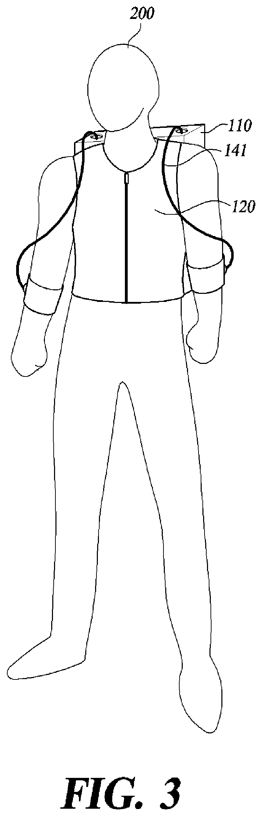

FIG. 3 is a diagram illustrating a fixing unit according to another embodiment of the present disclosure.

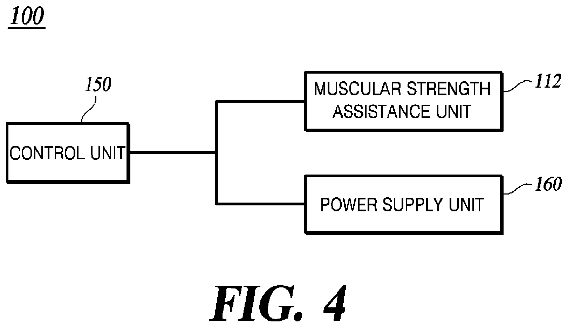

FIG. 4 is a block diagram of a wearable suit according to one embodiment of the present disclosure.

Referring to FIGS. 1 to 4, a wearable suit 100 according to one embodiment of the present disclosure includes a body unit 110, a fixer 120, which may also be referred to as a fixing unit 120, coupler 130, which may also be referred to as a coupling unit 130, a connector 140, which may also be referred to as a connecting unit 140, a control unit 150, and a power supply unit 160.

The body unit 110 may include a housing 111 and a muscular strength assistor 112, which may also be referred to as muscular strength assistance unit 112.

The muscular strength assistance unit 112 may include an elastic body 112a, a terminal 112b, and a supporting member (supporting member, 112c).

The fixing unit 120 may include a shoulder belt 121, a chest belt 122, and a waist belt 123.

The coupling unit 130 may include an arm coupling unit 131 and a leg coupling unit 132.

The connecting unit 140 may include an arm connecting unit 141 and a leg connecting unit 142.

The body unit 110 is disposed in at least a part of an upper body of a user 200. The body unit 110 may be disposed behind the upper body of the user 200. For example, at least a part of the body unit 110 may be formed of an elastic material such as a spring. For example, the aforementioned elastic material may be a shape memory alloy. The body unit 110 may be connected to at least a part of the fixing unit 120. The body unit 110 may be connected to the shoulder belt 121 and the waist belt 123. The body unit 110 is connected to the connecting unit 140. The body unit 110 is connected to the coupling unit 130 using a connecting unit 140. The body unit 110 may be controlled by the control unit 150 to be activated and deactivated.

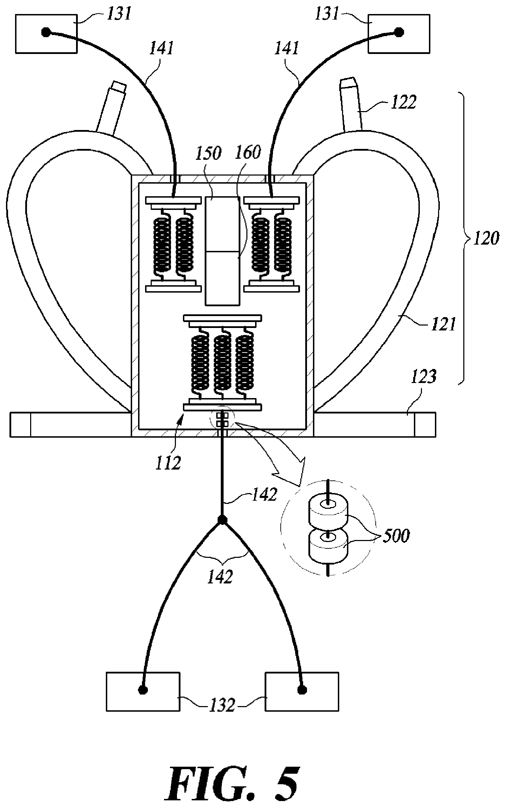

The housing 111 is disposed in at least a part of the upper body of the user 200. The housing 111 may include an accommodation space therein. In the accommodation space inside the housing 111, at least some of the muscular strength assistance unit 112, the control unit 150, the power supply unit 160, a guiding unit 500 (refer to FIG. 5) and the connecting unit 140 may be disposed. The housing 111 and the shoulder belt 121 may be formed in a backpack shape.

The muscular strength assistance unit 112 is configured to assist the muscular strength of the user 200. The muscular strength assistance unit 112 may be disposed inside the housing 111. At least a part of the muscular strength assistance unit 112 may be formed of an elastic material such as a spring. For example, the elastic material described above may be a shape memory alloy. At least a part of the muscular strength assistance unit 112 may contract and expand. Power may be applied to the muscular strength assistance unit 112 by the power supply unit 160. At least a part of the muscular strength assistance unit 112 is connected to the connecting unit 140. The muscular strength assistance unit 112 may be connected to the coupling unit 130 using the connecting unit 140. The number of muscular strength assistance units 112 may be plural. The muscular strength assistance unit 112 may be controlled by the control unit 150.

The elastic body 112a may generate an assistance force to assist a movement of the user by using an elastic restoring force. The elastic body 112a may be formed of, for example, a shape memory alloy material. The elastic body 112a is formed to be able to contract and expand. The elastic body 112a may be disposed inside the housing 111. The elastic body 112a may be electrically connected to the terminal 112b. The elastic body 112a may be connected to the supporting member 112c. As the elastic body 112a contracts or expands, the terminal 112b and the supporting member 112c may move.

When the elastic body 112a is formed of a shape memory alloy material, the elastic body 112a may contract and expand using power supplied from the power supply unit 160. Heat is generated by the power applied to the elastic body 112a and electrical resistance of the elastic body 112a. As the temperature of the elastic body 112a increases, the elastic body 112a contracts. As the power supplied to the elastic body 112a is cut off, the elastic body 112a may be cooled.

The number of elastic bodies 112a may be plural. The plurality of elastic bodies 112a may be disposed in series and/or parallel to each other. In this case, the plurality of elastic bodies 112a may be disposed in an appropriate form in consideration of resistance of the elastic body 112a and/or power supplied from the power supply unit 160.

In this way, when the elastic body (112a) is used as a driving source of the wearable suit 100, compared to the case of using a motor as a driving source, it is possible to assist the muscular strength of the user 200 with a simple configuration, it is possible to reduce the weight of the wearable suit 100, it is advantageous in terms of cost, and noise caused by the driving of a motor can be reduced.

Specifically, when a motor is used as a driving source, a reducer is additionally required to change the rotation of the motor into linear motion or slow angular motion. When the elastic body 112a is used as the driving source for the wearable suit 100, it is possible to assist the muscular strength of the user 200 with a relatively simple configuration since no additional configuration such as the reducer is required.

A motor that produces a general output of about 150W has a weight of about 3kg, and as described above, a separate reducer is required. Meanwhile, when the elastic body 112a is used as the driving source of the wearable suit 100, it can be configured with a weight of about 300g to produce a similar output, and an additional configuration such as a reducer is unnecessary. Accordingly, the weight of the wearable suit 100 can be significantly reduced.

In order to produce motors, core processes such as winding, fusing, and inspection are required, which cannot be performed manually, so process development and specialized production lines are required. In addition, when the elastic body 112a is formed of a shape memory alloy, the price of the shape memory alloy is cheaper than that of magnetic materials (for example, neodymium) and copper, which are core parts of the motor. Accordingly, when the elastic body 112a is used as the driving source of the wearable suit 100, the need for process development and specialized production lines is excluded, manufacturing costs are reduced, and economic feasibility can be improved.

An AC motor, a DC motor, and the like require a brush to supply electricity to a rotor, and the lifespan is limited and the size increases due to the configuration of the brush. Even when a brushless motor is considered to compensate for this, it is necessary to develop a dedicated brushless motor for application to a specific field (for example, wearable suit, or the like), and this requires cost and specialized manpower (for example, doctoral level manpower, or the like). In addition, a separate controller is essential for a brushless motor, and even when the development of a dedicated motor is successful, it is a reality that the cost of a 100W to 500W class motor for application to wearable suits 100 is minimized only when there is an annual demand of more than 500,000 units. Meanwhile, when the elastic body 112a is used as the driving source of the wearable suit 100, an additional configuration such as the brush is not required, so the lifespan is not limited and the size of the driving source can be reduced. In addition, since there is no need to separately develop a dedicated driving source, costs and manpower are reduced.

Furthermore, in a case where the elastic body 112a is formed of a shape memory alloy material, as it is possible to change the elastic modulus of the elastic body 112a through the supply of power, by controlling power supply according to various situations, it is possible to provide assistance force and/or driving characteristics of various sizes.

The terminal 112b may be formed on the supporting member 112c. The terminal 112b may be electrically connected to the elastic body 112a. The terminal 112b may be electrically connected to the power supply unit 160. The terminal 112b may transmit power supplied from the power supply unit 160 to the elastic body 112a. The terminal 112b may be connected to the elastic body 112a and the supporting member 112c. As the elastic body 112a contracts or expands, the terminal 112b may move together with the supporting member 112c. The terminal 112b may be disposed inside the housing 111.

The supporting member 112c is connected to the elastic body 112a and the terminal 112b to support the elastic body 112a and the terminal 112b. The supporting members 112c may be disposed on both sides of the elastic body 112a. The supporting member 112c may be disposed inside the housing 111. The terminal 112b may be formed on the supporting member 112c. The supporting member 112c may be formed of an insulating material. The number of supporting members 112c may be plural. Some of the plurality of supporting members 112c may be connected to the connecting unit 140. The supporting member 112c connected to the connecting unit 140 moves as the elastic body 112a contracts or expands to assist the muscular strength of the user 200. Others of the plurality of supporting members 112c may be fixed inside the housing 111. For example, at least some of the plurality of supporting members 112c to be connected to the connecting unit 140 are movably installed with respect to the housing 111, and at least some of the supporting members 112c that are not connected to the connecting unit 140 may be provided to be fixed to the housing 111.

The fixing unit 120 fixes the body unit 110 to the upper body of the user 200. At least a part of the fixing unit 120 may be connected to the housing 111. The fixing unit 120 may include one or more of the shoulder belt 121, the chest belt 122, the waist belt 123, and a leg belt.

The shoulder belt 121 fixes the body unit 110 to the upper body of the user 200. When the user 200 wears the wearable suit 100, the shoulder belt 121 may be configured to surround the shoulder of the user 200. Both sides of the shoulder belt 121 may be connected to the housing 111. At least a part of the chest belt 122 may be connected to the shoulder belt 121.

The chest belt 122 fixes the body unit 110 to the upper body of the user 200. When the user 200 wears the wearable suit 100, the chest belt 122 may be configured to cover the chest of the user 200. At least a part of the chest belt 122 may be connected to the shoulder belt 121. A middle part of the chest belt 122 may be formed into a structure that can be combined and separated.

The waist belt 123 fixes the body unit 110 to the upper body of the user 200. When the user 200 wears the wearable suit 100, the waist belt 123 may be configured to surround the waist of the user 200. Both sides of the waist belt 123 may be connected to the housing 111. A middle part of the waist belt 123 may be formed in a structure capable of being coupled and separated. According to the waist belt 123, a state in which the body unit 110 is positioned in the upper body of the user 200 can be stably maintained. Meanwhile, even when the waist belt 123 is not provided, it should be noted that the body unit 110 can be located at the upper body of the user 200 by the fixing force of the leg belt, which will be described later, or by the weight of the body unit 110 and the shoulder belt 121.

The leg belt may fix the body unit 110 to the upper body of the user 200. When the wearable suit 100 assists the muscular strength of the arms of the user 200, the leg belt fixes the body unit 110 to the upper body of the user 200. In this case, the leg coupling unit 132 and the leg connecting unit 142 may serve as the leg belt. Meanwhile, when the wearable suit 100 assists only the arms of the user 200, it should be noted that the leg belt may be omitted.

As illustrated in FIG. 3, the fixing unit 120 may be provided in the form of a vest. The vest-shaped fixing unit 120 may be understood as integrally formed with two or more of the shoulder belt 121, the chest belt 122, and the waist belt 123. For example, the fixing unit 120 may be formed in a shape in which the left and right shoulder belts 121 are connected to each other by a fastening means such as a zipper or a button.

The coupling unit 130 is coupled to at least a part of the body of the user 200. The coupling unit 130 may be coupled to at least some of the arms and/or legs of the user 200. The coupling unit 130 may be connected to the body unit 110 by the connecting unit 140. The coupling unit 130 may be connected to the muscular strength assistance unit 112 to assist the muscular strength of the user 200. The number of coupling units 130 may be plural. The coupling unit 130 may be formed in a band shape.

The arm coupling unit 131 couples with at least a part of the arm of the user 200. The arm coupling unit 131 is connected to the muscular strength assistance unit 112 by the arm connecting unit 141, and may assist the muscular strength of the arm of the user 200.

The leg coupling unit 132 is coupled to at least a part of the leg of the user 200. The leg coupling unit 132 is connected to the muscular strength assistance unit 112 by the leg connecting unit 142, and may assist the muscular strength of the leg and/or waist of the user 200. When the wearable suit 100 assists the muscular strength of the arm of the user 200, the leg coupling unit 132 may form a part of a leg belt.

The connecting unit 140 connects the body unit 110 and the coupling unit 130. The connecting unit 140 connects the muscular strength assistance unit 112 and the coupling unit 130. As the elastic body 112a contracts or expands, at least a part of the connecting unit 140 may move. The connecting unit 140 may be formed of an inflexible material. For example, at least a part of the connecting unit 140 may be formed of a polyester material. The connecting unit 140 may have a thickness of 8 mm to 10 mm. By inserting at least a part of the connecting unit 140 into the guiding member 500 (refer to FIG. 5), the position of the connecting unit 140 may be guided and/or fixed.

The arm connecting unit 141 connects the body unit 110 and the arm coupling unit 131. The arm connecting unit (141) connects the muscular strength assistance unit (112) and the arm coupling unit (131). As the elastic body 112a contracts or expands, at least a part of the arm connecting unit 141 moves to assist the muscular strength of the arm of the user 200.

Meanwhile, when the wearable suit 100 is provided to assist the muscular strength of the leg and/or waist of the user 200, the arm coupling unit 131 and the arm connecting unit 141 may be omitted.

The leg connecting unit 142 connects the body unit 110 and the leg coupling unit 132. The leg connecting unit 142 connects the muscular strength assistance unit 112 and the leg coupling unit 132. As the elastic body 112a contracts or expands, at least a part of the leg connecting unit 142 moves to assist the muscular strength of the leg and/or waist of the user 200. When the wearable suit 100 assists the muscular strength of the arm of the user 200, the leg connecting unit 142 may form a part of a leg belt. The leg connecting unit 142 may be formed in a "Y" shape or an "H" shape. The leg connecting unit 142 may be integrally formed, but is not necessarily limited thereto, and may be formed in a shape in which a plurality of components are combined depending on the purpose and use.

Meanwhile, when the wearable suit 100 is provided to assist the muscular strength of the arm of the user 200, the leg coupling unit 132 and the leg connecting unit 142 may be omitted.

The control unit 150 may control each component of the wearable suit 100. The control unit 150 may be disposed inside the housing 111. The control unit 150 may control the power supply unit 160. The control unit 150 may control the body unit 110 using the power supply unit 160. The control unit 150 may receive an operation signal of the wearable suit 100 from the switch. The control unit 150 may operate the wearable suit 100 based on the signal transmitted from the switch.

The control unit 150 may release the operation of the wearable suit 100 based on information on a load acting on the wearable suit 100. The control unit 150 may release the operation of the wearable suit 100 based on whether or not the load acting on the connecting unit 140 decreases.

The power supply unit 160 may be electrically connected to at least a part of the muscular strength assistance unit 112 to supply power to the muscular strength assistance unit 112. The power supply unit 160 may be electrically connected to the terminal 112b. The power supply unit 160 may be disposed inside the housing 111. Heat is generated by power supplied from the power supply unit 160 and electrical resistance of the elastic body 112a, and the temperature of the elastic body 112a rises. Accordingly, the elastic body 112a contracts and provides tension to the connecting unit 140, thereby assisting the muscular strength of the body part, for example, the arm, waist, and/or leg of the user to which the coupling unit 130 is mounted. The power supply unit 160 may be controlled by the control unit 150 to supply or cut off power to the muscular strength assistance unit 112.

FIG. 5 is a diagram illustrating a wearable suit in which a guiding member according to one embodiment of the present disclosure is installed.

The wearable suit 100 according to the present disclosure may further include the guiding member 500 configured to guide the position of the connecting unit 140. According to the guiding member 500, by allowing the connecting unit 140 to move along a set path, control accuracy can be further improved.

The guiding member 500 may guide and/or fix the position of the leg connecting unit 142. The guiding member 500 is configured such that at least a part of the leg connecting unit 142 is inserted thereinto. The guiding member 500 may be disposed inside the housing 111. The guiding member 500 may be fixed inside the housing 111. The guiding member 500 may be formed in a pipe or ring shape. The number of guiding members 500 may be plural.

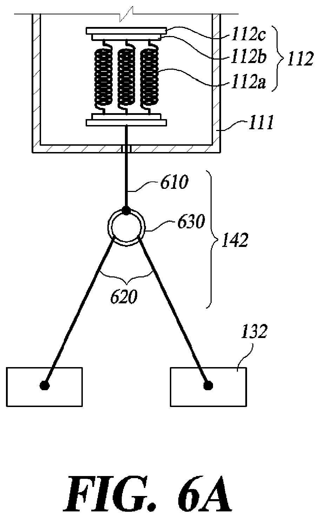

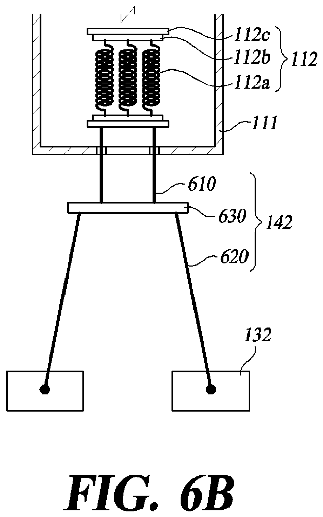

FIGS. 6A and 6B are diagrams illustrating various embodiments of the leg connecting unit according to the present disclosure.

Referring to FIGS. 6A and 6B, the leg connecting unit 142 according to one embodiment of the present disclosure may include a first leg connecting unit 610, a second leg connecting unit 620, and a third leg connecting unit 630.

One side of the first leg connecting unit 610 is connected to the body unit 110. One side of the first leg connecting unit 610 may be connected to the supporting member 112c of the muscular strength assistance unit 112. As the elastic body 112a contracts or expands, at least a part of the first leg connecting unit 610 may move together with the supporting member 112c. The other side of the first leg connecting unit 610 may be connected to the third leg connecting unit 630. The first leg connecting unit 610 may be connected to the second leg connecting unit 620 by the third leg connecting unit 630. A cross section of the first leg connecting unit 610 may have a circular shape. The first leg connecting unit 610 may be formed of a polyester material. The number of the first leg connecting units 610 may be plural. Depending on the purpose and use, the first leg connecting unit 610 may be formed in various lengths.

One side of the second leg connecting unit 620 is connected to the leg coupling unit 132. The other side of the second leg connecting unit 620 may be connected to the third leg connecting unit 630. The second leg connecting unit 620 may be connected to the first leg connecting unit 610 by a third leg connecting unit 630. The second leg connecting unit 620 may be formed of a polyester material. The second leg connecting unit 620 may have a shape with a width wider than a thickness. According to this shape, by thinning the thickness of the part in contact with the body (for example, waist, buttocks, and/or thighs) of the user of the leg connecting unit 142 based on the state in which the user is sitting on a chair for rest, it is possible to sufficiently secure the rigidity of the second leg connecting unit 620 while eliminating discomfort during seating. For example, the second leg connecting unit 620 may be formed in a thin and flat shape (for example, a webbing belt shape) similar to a seat belt of a vehicle. The number of the second leg connecting units 620 may be plural. Depending on the purpose and use, the second leg connecting unit 620 may be formed in various lengths.

The third leg connecting unit 630 is disposed between the first leg connecting unit 610 and the second leg connecting unit 620. The third leg connecting unit 630 connects the other side of the first leg connecting unit 610 and the other side of the second leg connecting unit 620. The third leg connecting unit 630 may support and/or fix the first leg connecting unit 610 and the second leg connecting unit 620. The third leg connecting unit 630 may be formed in a ring or bar shape.

For example, as illustrated in FIG. 6A, when the third leg connecting unit 630 is formed in a ring shape, according to such a structure, the structure is simple, and a pair of second leg connecting units can improve the left-right balance. For example, the second leg connecting unit 620 may be installed in the third leg connecting unit 630 to be movable along the circumference of the third leg connecting unit 630.

For example, as illustrated in FIG. 6B, when the third leg connecting unit 630 is formed in a bar shape, by sufficiently spaced the distance between the pair of second leg connecting units 620, it is possible to reduce the portion where the second leg connecting unit 620 touches the buttocks of the user. In addition, by reducing the angle formed by the second leg connecting unit 620 with respect to the transmission direction of force from the muscular strength assistance unit 112 to the leg coupling unit 132, power transmission efficiency can be improved.

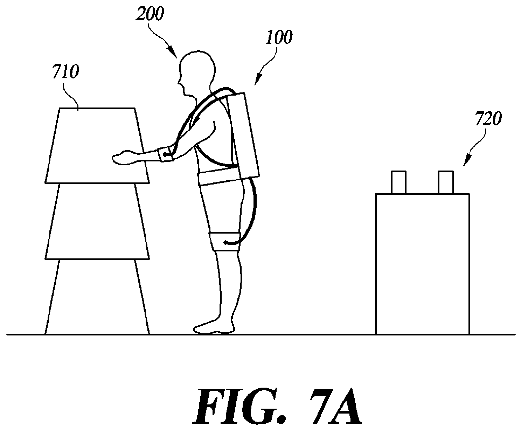

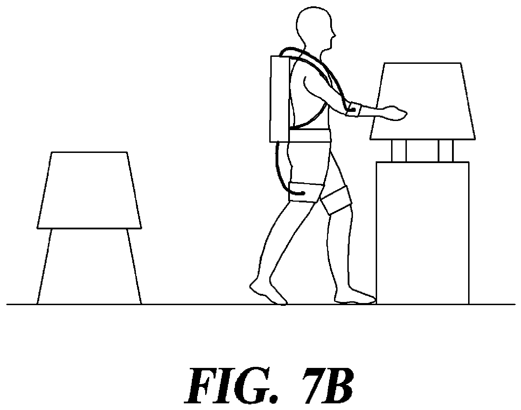

FIGS. 7A and 7B are diagrams illustrating an operating principle of the wearable suit according to one embodiment of the present disclosure.

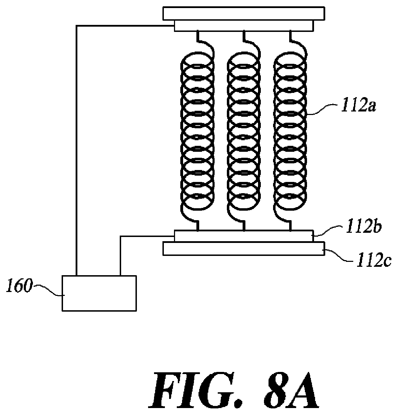

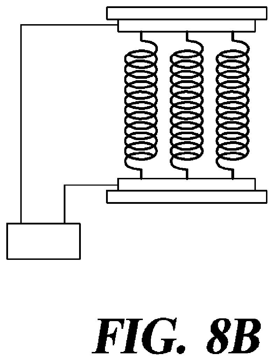

FIGS. 8A and 8B are diagrams illustrating the operating principle of the muscular strength assistance unit according to one embodiment of the present disclosure.

The operating principle of the wearable suit 100 according to one embodiment of the present disclosure will be described with reference to FIGS. 7A to 8B.

The user 200 wearing the wearable suit 100 approaches a heavy object 710 in order to move the heavy object 710 to a moving place such as a work table 720. The user 200 may stretch his/her arms or bend his/her waist to lift the heavy object 710. Accordingly, the elastic body 112a expands. The user 200 may transfer the operation signal of the wearable suit 100 to the control unit 150 using a switch or the like. The control unit 150 controls the power supply unit 160 so that power is supplied from the power supply unit 160 to the muscular strength assistance unit 112. Heat may be generated by power supplied from the power supply unit 160 and electrical resistance of the elastic body 112a. The temperature of the elastic body 112a may increase and the elastic body 112a may contract. As the elastic body 112a contracts, the muscular strength of the body of the user connected to the muscular strength assistance unit 112 can be assisted. As a result, the user 200 can move the heavy object 710 to the moving place such as the work table 720 with a small force.

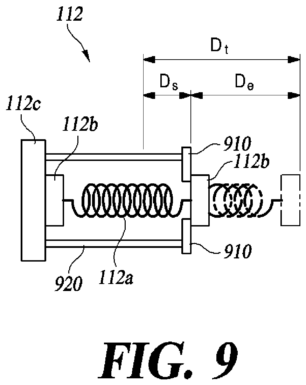

FIG. 9 is a diagram illustrating a structure of an actuator according to one embodiment of the present disclosure.

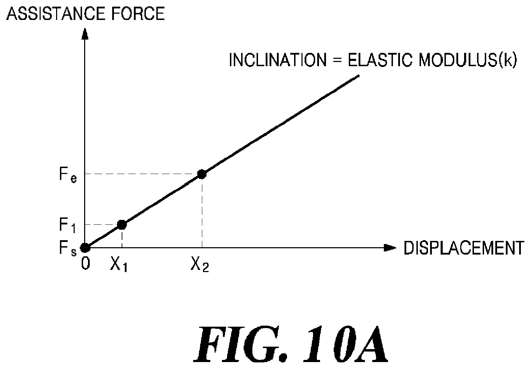

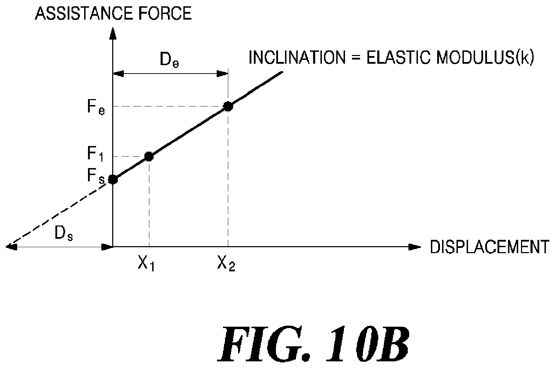

FIGS. 10A and 10B are displacement-assistance force graphs for each of an elastic body in equilibrium and an elastic body with initial displacement.

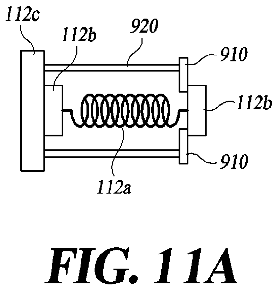

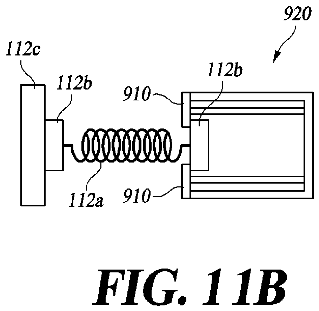

FIGS. 11A and 11B are diagrams illustrating various embodiments of a frame according to one embodiment of the present disclosure.

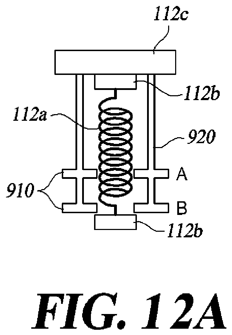

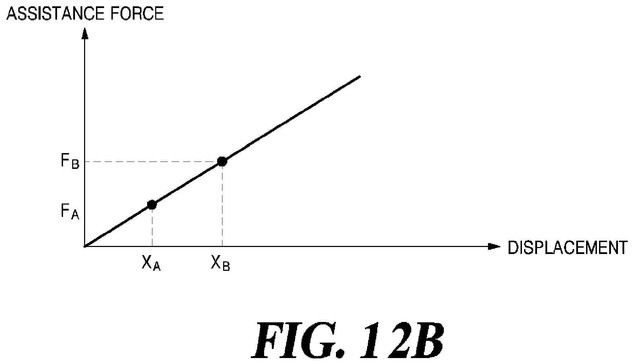

FIGS. 12A and 12B are diagrams illustrating a magnitude of an initial assistance force according to a position of a stopper according to one embodiment of the present disclosure.

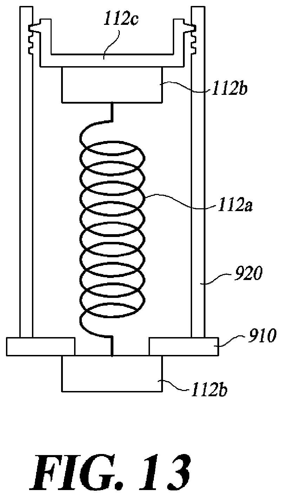

FIG. 13 is a diagram illustrating a structure of an actuator capable of changing the initial displacement of the elastic body according to one embodiment of the present disclosure.

Referring to FIGS. 9 to 13, the muscular strength assistance unit 112 of the wearable suit 100 according to one embodiment of the present disclosure includes the elastic body 112a, the terminal 112b, the supporting member 112c, a stopper 910, and frame 920.

Hereinafter, descriptions overlapping with those described above with respect to FIGS. 1 to 8B will be omitted, and the features of the stopper 910 and frame 920 of the muscular strength assistance unit 112 and the elastic body 112a related to them will be described in detail. However, it should be noted that all contents regarding the above-described elastic body 112a, terminal 112b, supporting member 112c, or the like may be equally applied to an extent that they do not conflict with contents to be described below.

Meanwhile, the elastic body 112a, the terminal 112b, the supporting member 112c, the stopper 910, and the frame 920 may be collectively referred to as an "actuator". When the actuator is used as a power source of the wearable suit 100 to assist the muscular strength of the user (200, refer to FIG. 2, or the like), the actuator may be referred to as a "muscular strength assistance unit (112, refer to FIG. 1, or the like)". Hereinafter, for convenience of explanation, it will be described assuming that the actuator is applied as the muscular strength assistance unit 112 to the wearable suit 100 configured to assist the muscular strength of the user 200, but it should be noted that the actuator according to the present disclosure can be utilized in any region where it is necessary to provide power.

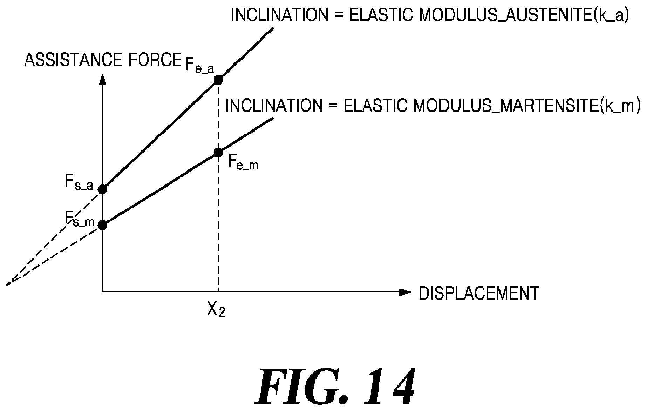

The muscular strength assistance unit 112 (actuator) may include the elastic body 112a formed of an elastic material. In other words, at least a part of the muscular strength assistance unit 112 may be made of an elastic body 112a. The elastic body 112a is formed of an elastic material such as a spring or elastic band, and may generate power (for example, an assistance force that assists the muscular strength of the user 200 of the wearable suit 100) by a repulsive force. The elastic body 112a is fixed by the stopper 910 in a state of contracting or expanding as much as an initial displacement Ds so that the muscular strength assistance unit 112 generates an initial assistance force (Fs, refer to FIG. 10B or the like) equal to or greater than a threshold. Here, the initial assistance force Fs means an assistance force that occurs at the beginning of the operation of the wearable suit 100, and for example, refers to an assistance force generated simultaneously with the movement of the user 200 wearing the wearable suit 100 in a direction opposite to the direction of action of the assistance force. The elastic body 112a is fixed by the stopper 910 in the contracted or expanded state by the initial displacement Ds, and as the user 200 wears the wearable suit 100 and performs work, the elastic body 112a may further contract or expand by a set motion displacement De. The elastic body 112a may be made of a material whose elastic modulus can be changed, for example, a shape memory alloy. Changes in the elastic modulus of the elastic body 112a will be described later with reference to FIG. 14.

For the muscular strength assistance unit 112 to generate the initial assistance force Fs, the stopper 910 fixes the elastic body 112a in a contracted or expanded state by the initial displacement Ds. For example, as illustrated in FIG. 9, the stoppers 910 may be disposed on both sides of the elastic body 112a and formed in a direction perpendicular to an expansion/contraction direction of the elastic body 112a. In addition, the stopper 910 may be configured to fix the elastic body 112a by directly contacting the elastic body 112a, and as illustrated in FIG. 9, may be configured to fix the elastic body 112a by fixing the terminal 112b or the supporting member 112c connected to the elastic body 112a. The stopper 910 may not only be fixedly installed at a specific location, but may also be configured such that the location can be adjusted. However, the shape or arrangement of the stopper 910 is not limited thereto, and various forms for fixing the elastic body 112a in the contracted or expanded state so that the muscular strength assistance unit 112 generates the initial assistance force Fs may be applied.

The muscular strength assistance unit 112 may be configured to change the initial displacement Ds of the elastic body 112a for generating the initial assistance force Fs. For example, the initial displacement Ds of the elastic body 112a may be changed by adjusting the position of the stopper 910, adjusting the thickness of the stopper 910, adjusting the position of the terminal 112b and the supporting member 112c disposed on the opposite side of the stopper 91, or the like.

For example, referring to FIG. 13, a part of the supporting member 112c disposed on the opposite side of the stopper 910 protrudes in a direction toward the frame 920, and a plurality of grooves into which the protruding portion of the supporting member 112c can be inserted are formed in the frame 920. By changing the position of the groove of the frame 920 into which the supporting member 112c is inserted according to the required magnitude of the initial assistance force Fs, the initial displacement Ds of the elastic body 112a is changed and the initial assistance force Fs may vary. It goes without saying that the reverse structure may be applied, in which a part of the frame 920 protrudes and a groove into which the protruding portion of the frame 920 can be inserted is formed in the supporting member 112c. As a result, by changing the initial displacement Ds of the elastic body 112a through a simple structure, it is possible to generate an appropriate initial assistance force Fs as needed.

However, the structure for changing the initial displacement Ds of the elastic body 112a is not limited to this, and the following various method, that is, fixing the entire block using a latch or the like after moving the entire block including the terminal 112b and the supporting member 112c using a dowel pin or the like, moving the terminal 112b and the supporting member 112c or the like using a screw structure, disposing a member such as a block having a predetermined thickness between the stopper 910 and the terminals 112b supported by the stopper 910, or the like may be applied.

Referring to FIGS. 9, 11A, 11B, 12A, 12B, and 13, the frame 920 supports the stopper 910. One side of the frame 920 may be coupled with the stopper 910. In order to support the stopper 910, the other side of the frame 920 may be fixed to a fixed supporting member 112c or a wall surface of the housing 111 (refer to FIG. 1, or the like). The frame 920 may be formed along the contraction direction (FIG. 11A) or expansion direction (FIG. 11B) of the elastic body 112a. When the frame 920 is formed along the contraction direction of the elastic body 112a, one side of the frame 920 is coupled to the stopper 910, and the other side thereof may be fixed to the fixed supporting member 112c or the wall surface of the housing 111. When the frame 920 is formed along the expansion direction of the elastic body 112a, one side of the frame 920 may be coupled to the stopper 910 and the other side thereof may be fixed to the wall surface of the housing 111. The length of the frame 920, that is, the position of the stopper 910, may be determined based on the elastic modulus of the elastic body 112a, the number of elastic bodies 112a, and the required magnitude of the initial assistance force Fs. As illustrated in FIG. 13, the plurality of grooves into which the protruding portion of the supporting member 112c can be inserted may be formed in the frame 920. However, the shape and structure of the frame 920 is not limited thereto, and various shapes and structures for supporting the stopper 910 may be applied.

In the wearable suit 100 according to the present disclosure, instead of applying the elastic body 112a in a state of equilibrium (in which no force is applied and not contracted or expanded (initial displacement Ds is 0)) (FIG. 10A), the elastic body 112a contracted or expanded by a predetermined displacement (initial displacement Ds exceeds 0) may be applied (FIG. 10B).

Referring to FIGS. 10A and 10B, the contraction or expansion displacement of the elastic body 112a is proportional to the elastic force. When the elastic body 112a in a state of equilibrium is applied to the wearable suit 100 (FIG. 10A), in the initial operation of the wearable suit 100 (initial time point when the user 200 moves in the direction opposite to the direction of the assistance force, $X \approx 0$), the assistance force generated is close to 0, and an assistance force F1 generated at a displacement X1 is $k \times (X_1)$. According to this, when the user 200 of the wearable suit 100 lifts the heavy object 710 (refer to FIGS. 7A and 7B), the assistance force is hardly provided at the beginning of work (a posture such as slightly bending the body), the assistance force can be provided only in a state (squatting down, or the like) in which the body is moved a lot to lift the heavy object 710, and thus, work efficiency is reduced.

Meanwhile, when the elastic body 112a contracted or expanded by the initial displacement Ds is applied to the wearable suit 100 (FIG. 10B), even at the initial operation of the wearable suit 100, the initial assistance force Fs equal to $k \times (Ds)$ can be provided to the user 200, and a relatively large assistance force equal to $Fs + k \times (X_1)$ can be provided to the user 200 even at the subsequent displacement X1. As a result, the wearable suit 100 according to the present disclosure provides the user 200 with the initial assistance force Fs by the initial displacement Ds even at the initial operation, and thereafter, provides a relatively large assistance force to the user 200. Accordingly, it is possible to remarkably improve the work convenience of the user 200.

In addition, when the elastic modulus of the elastic body 112a is increased to increase the assistance force F1 that occurs at the beginning of the operation such as the displacement X1 point, the final assistance force Fe becomes too large or the operable motion displacement De in a state where the user 200 wears the wearable suit 100 becomes too small in the range (for example, 50 mm to 250 mm) of the motion displacement De actually applicable to the wearable suit 100, and thus, the wearable suit 100 practical for the user 200 cannot be provided. From this point of view, the wearable suit 100 according to the present disclosure can secure practical motion displacement De and final assistance force Fe while providing the user 200 with the initial assistance force Fs at the initial operation.

Regarding the final assistance force Fe of the muscular strength assistance unit 112, the final assistance force Fe may be determined based on the weight of the heavy object 710 lifted by the user 200 using the wearable suit 100 and the maximum load that the user 200 can withstand. Since the wearable suit 100 can be used for the purpose of assisting the user 200 in lifting the heavy object 710 that is impossible or difficult for the user 200 to lift with the bare hands, the user 200 may be provided with the final assistance force Fe of more than a weight that is difficult for an ordinary adult to lift with bare hands, for example, 10 kgf or more. In addition, when the final assistance force Fe is too large, since the user 200 wearing the wearable suit 100 should overcome a large force to move in a posture such as bending down or squatting to lift the heavy object 710, the movement of the user 200 becomes excessively uncomfortable. Therefore, the user 200 may be provided with a final assistance force Fe of less than the maximum load that the user 200 can endure and overcome, for example, 25 kgf or less.

Regarding the initial assistance force Fs of the muscular strength assistance unit 112, when the initial assistance force Fs is excessively large, since the user 200 is excessively restricted in movement from the initial operation (when the body is bent at a small angle of about 30 degrees, or the like) of the wearable suit 100, the initial assistance force Fs may be a force within a range that the user 200 can easily overcome, for example, 10 kgf or less. In addition, the initial assistance force Fs may be determined based on the weight of the upper body of the user 200 and the muscular strength of the user 200. For example, since weight of an upper body of an ordinary adult is about 5 kg on average, the initial assistance force Fs is set to be more than 5 kgf even within 50 mm (when slightly bent at about 30 degrees), which is a relatively small motion displacement De. Accordingly, even when the user 200 moves slightly, such as slightly bending over, convenience can be improved with the assistance force.

[Equation 1]

$$\frac{F_s}{D_s} = \frac{F_e}{D_s + D_e}$$

$$\frac{F_s}{F_e} = \frac{D_s}{D_s + D_e}$$

Equation 1 may be derived from FIG. 10B, and as described above, the final assistance force Fe may be 10 kgf or more and 25 kgf or less, and the initial assistance force Fs may be 5 kgf or more and 10 kgf or less. As a result, the value (the value obtained by dividing the initial displacement Ds by the sum of the initial displacement Ds and motion displacement De) obtained by dividing the initial assistance force Fs of the muscular strength assistance unit 112 by the final assistance force Fe may be 0.2 or more. According to the invention, considering the slight margin of error and variables (for example, the body size of the user 200, the muscular strength of the user 200, the weight of the heavy object 710, or the like), the value obtained by dividing the initial assistance force Fs by the final assistance force Fe is set to be 0.17 or more. When the value obtained by dividing the initial assistance force Fs by the final assistance force Fe is less than 0.17, it is difficult to provide a practical wearable suit 100 to the user 200 as described above.

The motion displacement De of the wearable suit 100 may be determined based on the posture of the user according to a purpose of use (for example, courier logistics, agriculture, medical care, or the like) of the wearable suit 100. For example, the motion displacement De may be 50 mm when the user 200 bends at an angle of about 30 degrees, 100 mm when the user 200 bends at an angle of about 70 degrees, 150 mm when the user 200 bends at an angle of about 90 degrees, and 250 mm when the user 200 squats. That is, the motion displacement De is determined based on the posture of the user 200 according to the purpose of the wearable suit 100, and may be, for example, 50 mm or more and 250 mm or less. Such a posture of bending at an angle of about 30 degrees to about 90 degrees and a posture of squatting are postures that the user 200 may take while performing then operation such as moving the heavy object 710, and since the wearable suit 100 according to the present disclosure is designed to have the motion displacement De according to a posture that the user 200 performing the work can take, the convenience and work efficiency of the user 200 can be improved.

A total displacement Dt, which is the sum of initial displacement Ds and motion displacement De of the wearable suit 100, may be determined based on the body size (for example, upper body length) of the user 200. For example, since the length of the upper body of an adult is 400 mm on average, the total displacement Dt may be 400 mm or less so that the user 200 wearing the wearable suit 100 can move smoothly, and sufficient assistance force is provided to the user 200 to assist with movements and works such as moving the heavy object 710.

In this way, the muscular strength assistance unit 112 according to the present disclosure not only generates the initial assistance force Fs, but also is designed based on the posture of the user 200, the body size of the user 200, the maximum load that the user 200 can withstand, the weight of the heavy object 710, or the like according to the purpose of the wearable suit 100. Accordingly, an effective assistance force can be provided within the range of the motion displacement De according to a posture that the user 200 may take while performing the work.

FIG. 14 is a displacement-assistance force graph for the elastic body formed of a shape memory alloy and having the initial displacement according to one embodiment of the present disclosure.

The elastic body 112a according to the present disclosure may be made of a material whose elastic modulus can be changed, for example, a shape memory alloy. The shape memory alloy can change its structure from an austenite structure to a martensitic structure or from a martensitic structure to an austenite structure based on a specific temperature, and the elastic modulus can also change along with the structure change. As illustrated in FIG. 14, when the elastic body 112a is made of a material whose elastic modulus can be changed, such as shape memory alloy, a plurality of initial assistance forces Fs and final assistance forces Fe by a plurality of elastic modulus values may be provided to the user 200. When a relatively small assistance force is required according to the work situation of the user 200 wearing the wearable suit 100, an assistance force (Fs _m, Fe _m) by the martensitic tissue illustrated in FIG. 14 is provided to the user 200. Moreover, when a relatively large assistance force is required, an assistance force (Fs _a, Fe _a) by the austenite structure illustrated in FIGS. 12A and 1B may be provided to the user 200. As a result, according to the present disclosure, since the elastic body 112a is made of a material whose elastic modulus can be changed, such as shape memory alloy, assistance forces of various sizes are provided to the user 200 according to the needs of the user 200 and work conditions, and there is an additional effect of increasing the degree of freedom in design.

The wearable suit according to one embodiment assists a muscular strength of a user using the muscular strength assistance unit including the elastic body, thereby simplifying the structure, reducing weight, and removing noise caused by driving a motor.

The wearable suit according to one embodiment can provide sufficient assistance force to the user even at the beginning of operation by using the stopper that fixes the elastic body in the contracted or expanded state.

While this disclosure includes specific examples, it will be apparent after an understanding of the disclosure of this application that various changes in form and details may be made in these examples without departing from the scope of the claims and their equivalents.

**Claims**

1. A wearable suit (100) comprising:

   an elastic body (112a) configured to generate an assistance force to assist a muscular strength of a user; and
   a stopper (910) configured to fix the elastic body (112a) in a contracted or expanded state by an initial displacement so that an initial assistance force equal to or more than a threshold is generated by the elastic body (112a),
   wherein the initial assistance force divided by a final assistance force generated by the elastic body (112a) is set to be greater than or equal to 0.17.

2. The wearable suit (100) of claim 1, wherein an elastic modulus of the elastic body (112a) is changeable.

3. The wearable suit (100) of claim 2, wherein the elastic body (112a) is made of a shape memory alloy.

4. The wearable suit (100) of any one of claims 1 to 3, further comprising a frame (920) configured to support the stopper (910),
   wherein the frame (920) is formed along a contraction direction or an expansion direction of the elastic body (112a).

5. The wearable suit (100) of any one of claims 1 to 4, wherein the stopper (910) is formed along a direction perpendicular to an expansion/contraction direction of the elastic body (112a).

6. The wearable suit of any one of claims 1 to 5, further comprising:

   a supporting member (112c) disposed on the opposite side of the stopper (910), wherein a part of supporting member (112c) protrudes in a direction toward the frame (920), and
   a plurality of grooves formed in the frame (920) and receiving the part of the supporting member (112c).

7. The wearable suit (100) of any one of claims 1 to 6, wherein a final assistance force generated by the elastic body (112a) is greater than or equal to 10 kgf and lesser than 25 kgf.

8. The wearable suit (100) of any one of claims 1 to 7, wherein the initial assistance force is greater than or equal to 5 kgf.

9. The wearable suit (100) of any one of claims 1 to 8, wherein a motion displacement of the wearable suit (100) is determined based on a posture of the user according to a purpose of use of the wearable suit (100).

10. The wearable suit (100) of claim 9, wherein the motion displacement of the wearable suit (100) is greater than or equal to 50 mm and lesser than 250 mm.

11. The wearable suit (100) of any one of claims 1 to 10, wherein a total displacement, which is a sum of the initial displacement and a motion displacement of the wearable suit (100), is lesser than or equal to 400 mm.

12. The wearable suit (100) of any one of claims 1 to 11, wherein the initial displacement is adjustable.

13. The wearable suit (100) of any one of claims 1 to 12, further comprising:

    a body unit (110);
    a fixer (120) configured to fix the body unit (110) to a body of the user;
    a coupler (130) coupled with at least a part of a leg of a user; and
    a connector (140) configured to connect the body unit (110) and the coupler (130),
    wherein the body unit (110) comprises

    a housing (111) including an accommodation space therein, and
    a muscular strength assistor (112) disposed in the accommodation space and comprising the elastic body (112a) and the stopper (910).

14. The wearable suit (100) of any one of claims 1 to 13, wherein the threshold comprises a set magnitude exceeding 0.

**Patentansprüche**

1. Tragbarer Anzug (100), umfassend:

   einen elastischen Körper (112a), der dazu eingerichtet ist, eine Unterstützungskraft zum Unterstützen einer Muskelkraft eines Benutzers zu erzeugen; und

einen Anschlag (910), der dazu eingerichtet ist, den elastischen Körper (112a) durch eine anfängliche Verschiebung in einem kontrahierten oder expandierten Zustand zu fixieren, so dass von dem elastischen Körper (112a) eine anfängliche Unterstützungskraft erzeugt wird, die gleich oder größer als ein Schwellenwert ist, wobei die anfängliche Unterstützungskraft geteilt durch eine von dem elastischen Körper (112a) erzeugte endgültige Unterstützungskraft auf größer oder gleich 0,17 eingestellt ist.

2. Tragbarer Anzug (100) nach Anspruch 1, wobei ein Elastizitätsmodul des elastischen Körpers (112a) veränderbar ist.

3. Tragbarer Anzug (100) nach Anspruch 2, wobei der elastische Körper (112a) aus einer Formgedächtnislegierung hergestellt ist.

4. Tragbarer Anzug (100) nach einem der Ansprüche 1 bis 3, weiterhin umfassend einen Rahmen (920), der dazu eingerichtet ist, den Anschlag (910) zu stützen, wobei der Rahmen (920) entlang einer Kontraktionsrichtung oder einer Expansionsrichtung des elastischen Körpers (112a) gebildet ist.

5. Tragbarer Anzug (100) nach einem der Ansprüche 1 bis 4, wobei der Anschlag (910) entlang einer Richtung senkrecht zu einer Expansions-/Kontraktionsrichtung des elastischen Körpers (112a) gebildet ist.

6. Tragbarer Anzug nach einem der Ansprüche 1 bis 5, weiterhin umfassend:

ein Stützelement (112c), das auf der gegenüberliegenden Seite des Anschlags (910) angeordnet ist, wobei ein Teil des Stützelements (112c) in einer Richtung zum Rahmen (920) hin vorsteht, und

eine Mehrzahl von Nuten, die im Rahmen (920) gebildet sind und den Teil des Stützelements (112c) aufnehmen.

7. Tragbarer Anzug (100) nach einem der Ansprüche 1 bis 6, wobei eine von dem elastischen Körper (112a) erzeugte endgültige Unterstützungskraft größer oder gleich 10 kgf und kleiner als 25 kgf ist.

8. Tragbarer Anzug (100) nach einem der Ansprüche 1 bis 7, wobei die anfängliche Unterstützungskraft größer oder gleich 5 kgf ist.

9. Tragbarer Anzug (100) nach einem der Ansprüche 1 bis 8, wobei eine Bewegungsverschiebung des tragbaren Anzugs (100) basierend auf einer Haltung des Benutzers entsprechend einem Verwendungszweck des tragbaren Anzugs (100) bestimmt wird.

10. Tragbarer Anzug (100) nach Anspruch 9, wobei die Bewegungsverschiebung des tragbaren Anzugs (100) größer oder gleich 50 mm und kleiner als 250 mm ist.

11. Tragbarer Anzug (100) nach einem der Ansprüche 1 bis 10, wobei eine Gesamtverschiebung, die eine Summe der anfänglichen Verschiebung und einer Bewegungsverschiebung des tragbaren Anzugs (100) ist, kleiner oder gleich 400 mm ist.

12. Tragbarer Anzug (100) nach einem der Ansprüche 1 bis 11, wobei die anfängliche Verschiebung einstellbar ist.

13. Tragbarer Anzug (100) nach einem der Ansprüche 1 bis 12, weiterhin umfassend:

eine Körpereinheit (110);
eine Fixiereinrichtung (120), die dazu eingerichtet ist, die Körpereinheit (110) an einem Körper des Benutzers zu fixieren;
eine Kopplungseinrichtung (130), die mit zumindest einem Teil eines Beins eines Benutzers gekoppelt ist; und
einen Verbinder (140), der dazu eingerichtet ist, die Körpereinheit (110) und die Kopplungseinrichtung (130) zu verbinden,
wobei die Körpereinheit (110) umfasst:

ein Gehäuse (111) mit einem darin befindlichen Aufnahmeraum und
einen Muskelkraftassistenten (112), der im Aufnahmeraum angeordnet ist und den elastischen Körper (112a) und den Anschlag (910) umfasst.

14. Tragbarer Anzug (100) nach einem der Ansprüche 1 bis 13, wobei der Schwellenwert eine festgelegte Größe umfasst, die 0 überschreitet.

**Revendications**

1. Combinaison vestimentaire (100) comprenant:

un corps élastique (112a) conçu pour générer une force auxiliaire afin d'aider la force musculaire d'un utilisateur; et
une butée (910) conçue pour bloquer le corps élastique (112a) lorsqu'il est comprimé ou étiré par un déplacement initial de sorte qu'une force auxiliaire initiale supérieure ou égale à un seuil est générée par le corps élastique (112a),

dans lequel la force auxiliaire initiale divisée par une force auxiliaire finale générée par le corps élastique (112a) est définie pour être supérieure ou égale à 0,17.

2. Combinaison vestimentaire (100) selon la revendication 1, dans laquelle un module d'élasticité du corps élastique (112a) est modifiable.

3. Combinaison vestimentaire (100) selon la revendication 2, dans laquelle le corps élastique (112a) est fabriqué en alliage à mémoire de forme.

4. Combinaison vestimentaire (100) selon l'une quelconque des revendications 1 à 3, comprenant en outre un cadre (920) conçu pour supporter la butée (910),
dans laquelle le cadre (920) est formé dans une direction de contraction ou d'une direction d'étirement du corps élastique (112a).

5. Combinaison vestimentaire (100) selon l'une quelconque des revendications 1 à 4, dans laquelle la butée (910) est formée dans une direction perpendiculaire à une direction d'étirement/contraction du corps élastique (112a).

6. Vêtement vestimentaire selon l'une quelconque des revendications 1 à 5, comprenant en outre:

   un élément de support (112c) disposé sur le côté opposé de la butée (910), dans lequel une partie de l'élément de support (112c) fait saillie en direction du cadre (920), et
   une pluralité de rainures formées dans le cadre (920) et recevant la partie de l'élément de support (112c).

7. Combinaison vestimentaire (100) selon l'une quelconque des revendications 1 à 6, dans laquelle une force auxiliaire finale générée par le corps élastique (112a) est supérieure ou égale à 10 kgf et inférieure à 25 kgf.

8. Combinaison vestimentaire (100) selon l'une quelconque des revendications 1 à 7, dans laquelle une force auxiliaire initiale est supérieure ou égale à 5 kgf.

9. Combinaison vestimentaire (100) selon l'une quelconque des revendications 1 à 8, dans laquelle un déplacement de la combinaison vestimentaire (100) est déterminé sur la base d'une posture de l'utilisateur en fonction d'un but d'utilisation de la combinaison vestimentaire (100).

10. Combinaison vestimentaire (100) selon la revendication 9, dans laquelle le déplacement de la combinaison vestimentaire (100) est supérieur ou égal à 50 mm et inférieur à 250 mm.

11. Combinaison vestimentaire (100) selon l'une quelconque des revendications 1 à 10, dans laquelle un déplacement total, qui est la somme du déplacement initial et du déplacement de la combinaison vestimentaire (100), est inférieur ou égal à 400 mm.

12. Vêtement vestimentaire (100) selon l'une quelconque des revendications 1 à 11, dans lequel le déplacement initial peut être ajusté.

13. Combinaison vestimentaire (100) selon l'une quelconque des revendications 1 à 12, comprenant en outre:

   une unité corps (110);
   une fixation (120) conçue pour fixer l'unité corps (110) au corps de l'utilisateur;
   un élément d'accouplement (130) accouplé à au moins une partie d'une jambe de l'utilisateur; et
   un élément de liaison (140) conçu pour relier l'unité corps (110) et l'élément d'accouplement (130),
   dans laquelle l'unité corps (110) comprend

   un boîtier (111) comportant un espace de logement en son sein, et
   un système d'aide à la force musculaire (112) disposé dans l'espace de logement et comprenant le corps élastique (112a) et la butée (910).

14. Combinaison vestimentaire (100) selon l'une quelconque des revendications 1 à 13, dans laquelle le seuil comprend une amplitude définie dépassant 0.

**FIG. 1**

**FIG. 2**

**FIG. 3**

<u>*100*</u>

*150*

CONTROL UNIT

MUSCULAR STRENGTH ASSISTANCE UNIT — *112*

POWER SUPPLY UNIT — *160*

# FIG. 4

# FIG. 5

FIG. 6A

**FIG. 6B**

# FIG. 7A

# FIG. 7B

**FIG. 8A**

FIG. 8B

**FIG. 9**

**FIG. 10A**

FIG. 10B

# FIG. 11A

**FIG. 11B**

**FIG. 12A**

ASSISTANCE FORCE

*FIG. 12B*

**FIG. 13**

INCLINATION = ELASTIC MODULUS_AUSTENITE(k_a)

ASSISTANCE FORCE $F_{e\_a}$

INCLINATION = ELASTIC MODULUS_MARTENSITE(k_m)

$F_{e\_m}$

$F_{s\_a}$

$F_{s\_m}$

DISPLACEMENT

$X_2$

## *FIG. 14*

**REFERENCES CITED IN THE DESCRIPTION**

**Patent documents cited in the description**

- WO 2019161232 A1